# EUROPEAN PATENT SPECIFICATION

(11) **EP 3 099 625 B1**
(45) Date of publication and mention of the grant of the patent: **12.04.2017**
(21) Application number: 15703905.8
(22) Date of filing: 27.01.2015
(51) Int. Cl.: B66F 11/04, B64F 5/00, B66C 17/04

(54) **APPARATUS FOR TREATING THE SURFACE OR CARRYING OUT MAINTENANCE AND/OR INSPECTION TASKS OF A VERTICAL STABILIZER OF AN AERIAL VEHICLE IN A LOW INTERIOR HEIGHT HANGAR**
VORRICHTUNG ZUR BEHANDLUNG DER OBERFLÄCHEN ZUR AUSFÜHRUNG VON WARTUNGSARBEITEN UND/ODER FÜR INSPEKTIONSAUFGABEN EINES VERTIKALEN STABILISATORS EINES LUFTFAHRZEUGS IN EINEM HANGAR MIT GERINGER INNENHÖHE
APPAREIL POUR TRAITER LA SURFACE OU EFFECTUER DES TÂCHES DE MAINTENANCE ET/OU D'INSPECTION D'UN STABILISATEUR VERTICAL D'UN VÉHICULE AÉRIEN DANS UN HANGAR INTÉRIEUR DE FAIBLE HAUTEUR

(30) Priority: 29.01.2014 LU 92367
(43) Date of publication of application: 07.12.2016
(73) Proprietor: CTI SYSTEMS S.A., 9779 Lentzweiler (LU)
(72) Inventor: ROSTER, Thomas, 9641 Brachtenbach (LU)
(74) Representative: Dennemeyer & Associates S.A.
(86) International application number: PCT/EP2015/051539
(87) International publication number: WO 2015/113945

(56) References cited:
- EP-A1- 0 626 339
- EP-A1- 0 903 319
- DE-A1- 4 420 502
- GB-A- 1 236 471
- US-A- 3 814 211

## Description

### Description - Background:

The present invention relates to an aerial vehicle vertical stabilizer (31) top access suspended apparatus (20) for treating surfaces and/or carrying out maintenance/inspection tasks of a vertical stabilizer (31) of the aerial vehicle according to claim 1 and to a process for treating surfaces and/or carrying out maintenance/inspection tasks of a vertical stabilizer (31) of an aerial vehicle according to claim 15.

Aircraft painting or maintenance tasks require suitable systems to allow the technician to access the aircraft skin granting safe and ergonomical working conditions. Usually this is achieved through the use of teleplatforms. Teleplatforms offer in this regard the best flexibility in terms of access and fleet to be accessed. The disadvantage of such teleplatforms is the requirement to have a quite high building in relation to the aircraft to be serviced/painted (min. bottom truss level typically approx. 6m higher than the aircraft) which has a negative influence on the overall investment of such maintenance or painting facilities.

US 3814211 describes an apparatus especially designed for use in servicing the exterior of air and/or space vehicles comprising a vertical oriented telescopic mast, the upper end of which is fixedly connected to a trolley movable linearly on an overhead bridge which bridge is movable on a suitable overhead runway. The length of the overhead crane (C) of US 3814211 extends beyond the vertical axis of the vertical stabilizer of the plane. The apparatus of US 3814211 does not comprise any suspended staging structure which is not vertically movable and is independent from the vertically movable lateral teleplatform unit.

EP 0626339 describes an overhead crane with a movable telescopic arm (17) comprising vertically movable working platforms (22,23) for aircraft revision.

US 3602335 describes a platform positioning mechanism which relates to a combination of the class in which a carriage is mounted for vertical movement on a mast, the mast itself being mounted for lateral movement in a room or the like so as to bring the carriage into any position in the room. The length of the overhead crane (C) of US 3602335 extends beyond the vertical axis of the vertical stabilizer of the plane.

US 5314083 describes a telescopic tower for suspension from an overhang trolley, crane, or the like, have a lowermost tube for carrying a work area or platform, is constructed in that the tubes are of polygonal cross-section with inwardly, as well as outwardly projecting rails in corners of the polygon, rollers on the respective tubes run on these rails. The length of the overhead crane of US 5314083 extends beyond the vertical axis of the vertical stabilizer of the plane.

GB 1236471 relates to an installation for facilitating access to external parts of an aeroplane. The length of the overhead crane of GB 1236471 extends beyond the vertical axis of the vertical stabilizer of the plane (see figure 3). The staging structure (34a) is suspended by wheels running in the rails of the overhead crane.

DE 4420502 relates to a device for maintenance of a plane. The length of the overhead crane of DE 4420502 extends beyond the vertical axis of the vertical stabilizer of the plane (see figure 2).

EP 0903319 relates to a telescopic device for maintenance of a plane. EP 0903319 does not disclose any independent suspended staging structure connected to the overhead crane (4) by a supporting structure (5), the suspended staging structure (20) comprising at least an upper working platform and at least a lower working platform for treating the surface or carrying out maintenance/inspection tasks of the vertical stabilizer of the aerial vehicle at different heights by at least one technician.

### Summary of the invention:

The apparatus (20) for treating surfaces or carrying out maintenance and/or inspection tasks of a vertical stabilizer of an aerial vehicle of the present invention is defined in claim 1 and the process is defined in claim 15.

The closest prior art is EP 0626339 (see figure 1 reference sign 14) because it shows a vertically movable telescopic arm (17) comprising vertically movable working platforms (22,23) and an overhead crane (14) wherein its length does not extend beyond the vertical axis of the vertical stabilizer (26).

The difference between the closest prior art and the present invention is that the suspended staging structure (20) is not vertically movable and is independent from the vertically movable lateral teleplatform unit (30) permitting to reach the suspended staging structure (20).

The technical effect generated by the difference is :
- firstly that the height of the roof of existing hangar buildings for treating surfaces or carrying out maintenance/inspection tasks of the vertical stabilizer (31) of an aerial vehicle can be reduced between about 2 to 6 meters,
- secondly that the volume of the hangar building is reduced improving the heating speed of the hangar building and reducing the heating costs,
- thirdly that the surface of the vertical stabilizer of the aerial vehicle is treated simultaneously at different heights by several technicians,
- fourthly that we avoid an interdiction by the national authorities of hangar building construction due to a height exceeding the threshold,
- fifthly a reduction of building costs for hangars,
- sixthly that the technicians can effectively and safely reach the top of a plane stabilizer being at a maximum height substantively equal to the distance H between the roof (100) and the upper (4B) horizontal part of the overhead crane (4).

These advantages prove the existence of a synergy effect between the telescopic teleplatform unit (30) and the suspended staging structure (20).

The objective problem solved by the present invention is to find an apparatus permitting to improve the safety of the apparatus during maintenance and/or inspection tasks and efficacy of the treatment of the surface of a plane stabilizer (31) and also to provide the above mentioned advantages without deterring the environment.

The difference solves the above mentioned problem and is not obvious with regard to the closest prior art because EP 0626339 teaches only the presence of a vertically movable telescopic device (17) comprising at least one working platform (22,23) directly connected to telescopic device (17) (see column 4 lines 24-27 and figure 1). It is worth to note that the function of the uppest platform (24) in figure 1 of EP 0626339 is only to repair the motor of the telescopic device (see column 4 lines 28-34) contrary to the uppest platform (62) of the present invention which permits to treat the top of a plane stabilizer (31) being at a maximum height substantively equal to the distance H between the roof (100) and the upper (4B) horizontal part of the overhead crane (4).

The difference solves the above mentioned problem and is not obvious with regard to the closest prior art combined with GB 1236471 because the length of the overhead crane of GB 1236471 extends beyond the vertical axis of the vertical stabilizer of the plane (see figure 3). A person skilled in the art would not be led to combine an apparatus having the length of the overhead crane not extending beyond the vertical axis of the vertical stabilizer of the plane with an apparatus (to the contrary) having the length of the overhead crane extending beyond the vertical axis of the vertical stabilizer of the plane.

The person skilled in the art would not be led to combine EP 0626339 with GB 1236471 or with US 3814211 because GB 1236471 and US 3814211 use overhead cranes wherein the length of the overhead crane does extend beyond the vertical axis of the vertical stabilizer, contrarily to the present invention, leading to much higher hangar roof than in the present invention.

The present invention will allow one or several technicians to access simultaneously most of the upper aircraft surface including the vertical stabilizer within a hangar building of much lower height compared to the typical setup with a teleplatform unit.
This will be achieved in using a teleplatform unit (30) which consists of a teleplatform carrier and a crane to which an additional staging portion will be installed to extend the working area of the teleplatform. The access to the staging portion (20) can be achieved via the teleplatform working platform (41) when the platform is parked in a defined position and after a connecting hinged or retractable stair/ladder (9) has been lowered up to the teleplatform working platform (41) level.
The staging consists of a variable number of levels (usually 1, 2, 3,4,5,6,7 or even more levels).
The apparatus of the present invention is characterized by the fact that the overhead travelling crane (4) comprises a multiple level staging (20) system which will allow access to the upper part of the vertical stabilizer (31) of an aircraft in low headroom hangars (e.g. between 0,4 meter and 7 meter above the upper tip of the vertical stabilizer of the highest aircraft to be served in this hangar). The access to the staging will be achieved by a retractable or hinged stair (9) or ladder which will connect the teleplatform unit (30) working level with the staging structure (20).
The term "suspended" means hanging by firm attachment to something above.

The present invention relates to an apparatus comprising the features of claim 1, for being placed in a hangar building comprising a roof (100), said apparatus being conceived for treating surfaces or carrying out maintenance and/or inspection tasks of a vertical stabilizer (**31**) of an aerial vehicle by at least one technician.

The present invention relates also to a process for treating surfaces or carrying out maintenance and/or inspection tasks of a vertical stabilizer (31) of an aerial vehicle by the apparatus, comprising the steps defined in claim 5.

The present invention relates also to the use of the apparatus, firmly hanged on the roof (100) of a hangar building for treating surfaces or carrying out maintenance and/or inspection tasks of a vertical stabilizer **(31)** of an aerial vehicle by at least one technician, according to claims 8 to 17.

The present invention will be better understood with the accompanying drawings:

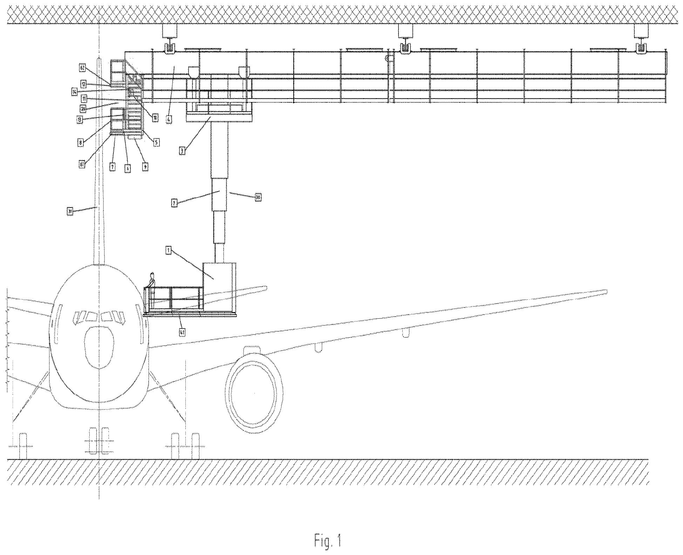

Figure 1: shows the front view of the system

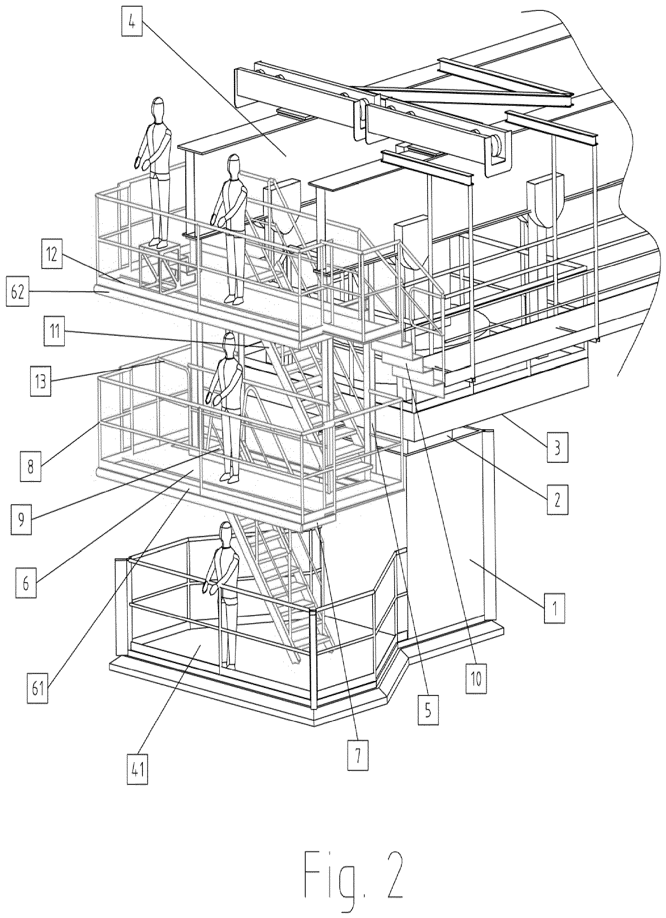

Figure 2: shows a perspective view of the staging and working platform in parked position

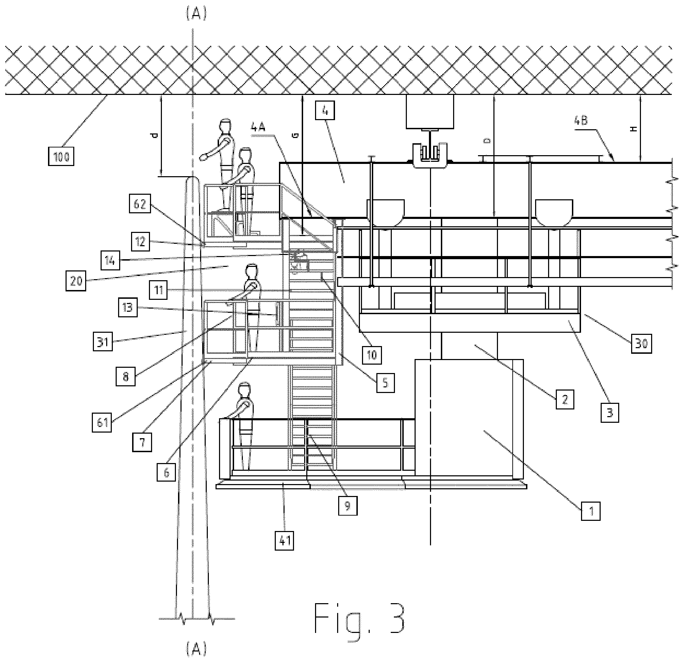

Figure 3: shows a front view of the staging and upper working platform permitting to a person to work on the top of the stabilizer, even if as shown in fig. 3 the distance "D" between the horizontal longitudinal lower part (4A) of the overhead crane (4) and the roof of the hangar is higher than the distance "d" between the top of the stabilizer (31) of the highest aircraft to be served in a hangar and the roof (100) of the hangar. The vertical axis (A) of the stabilizer is shown.

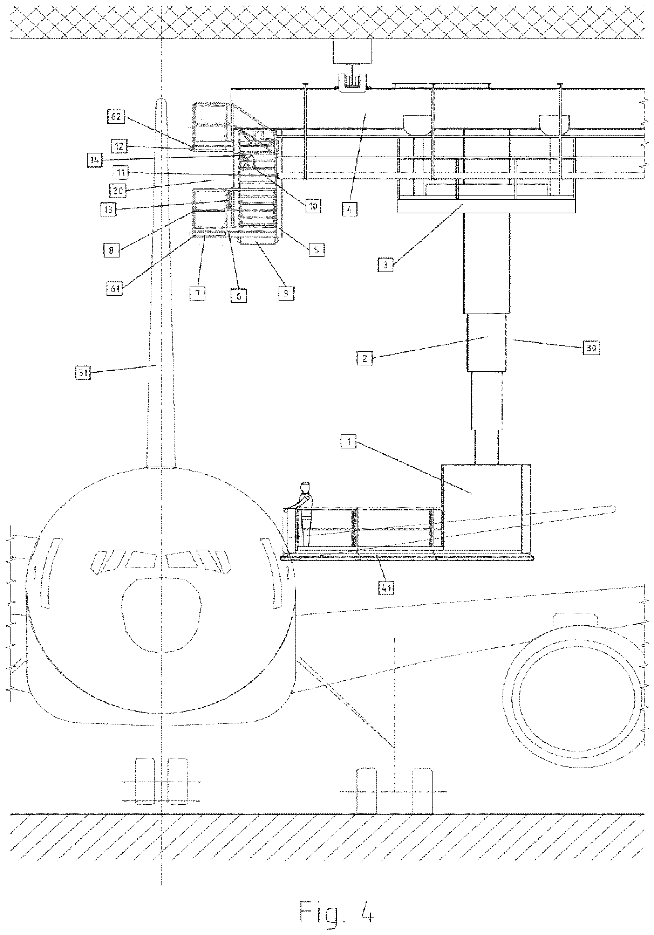

Figure 4: shows a detail front view of the staging in retracted position and working platform in fuselage working position

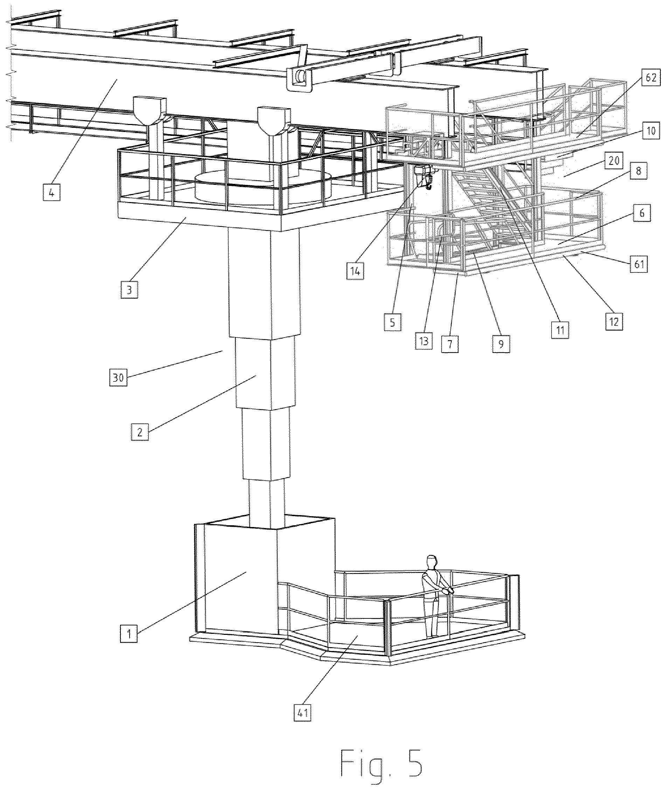

Figure 5: shows a perspective view of the staging in retracted position and working platform in fuselage right working position.

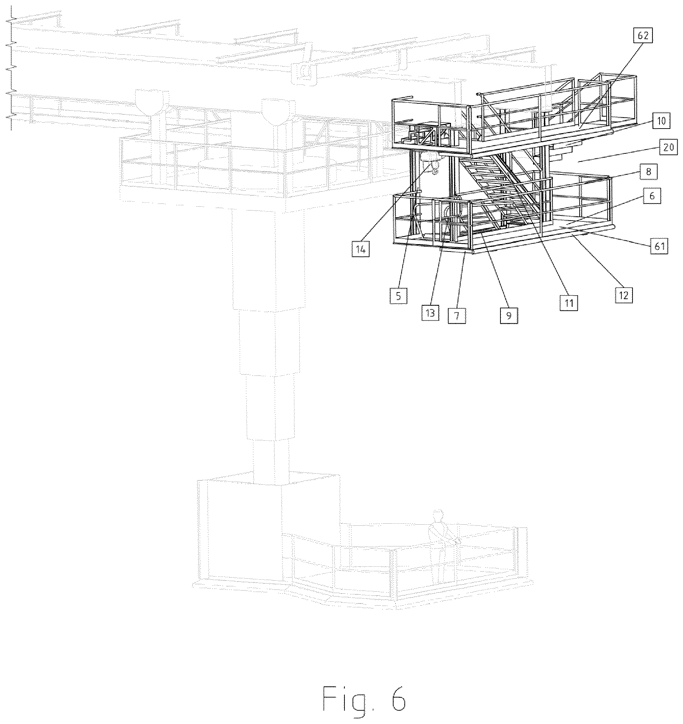

Figure 6: represents figure 5 where the novel apparatus of the present invention is only shown, the other apparatuses known from the prior art are in phantom lines.
Figure 7: defines the system axis (X,Y,Z).

### Detailed description of the invention:

The teleplatform apparatus consists of a teleplatform unit (30) and an overhead crane (4). The overhead crane (4) can travel along runways (along axis X) which are connected to the bottom truss of the horizontal building roof (100).

The teleplatform unit (30) consists of a carrier (3) which travels along the overhead crane girders and though allows movements in lateral direction (along axis Y). The carrier (3) is connected to a telescopic mast (2), and at the bottom of the telescopic mast to a teleplatform working platform (41) with for safety reasons a mechanical mast protection (1). The telescopic mast (2) allows the teleplatform working platform (41) to be lifted / lowered from ground level up to a working height (along axis Z) which as a minimum would allow a technician to reach the top center area of the aircraft fuselage and the lower part of the vertical stabilizer (31) in combination with a hangar building of reduced height. The connection of the telescopic mast (2) and the carrier (3) is done by means of a slewing ring which will allow a rotation of the teleplatform mast (2) and the teleplatform working platform (41).

The above described system has 4 axis (X, Y, Z and rotation) which will allow the technician to reach any point of the hangar (within the travel and rotation system limits) with the main working edge in a best possible orientation towards the object (aircraft skin).

The overhead crane (4) will be equipped with an additional independent staging structure (20) allowing the technician to reach the vertical stabilizer (31) portion up to the upmost aircraft edge.

The staging structure (20) will be connected to the overhead crane (4) by means of a supporting structure (5). The staging consists of above mentioned supporting structure to which multiple levels of working platforms (6) are connected. The access between one or a plurality of platforms is achieved using access stairs between working levels (11). The access to the staging is achieved using a retractable or hinged stair/ladder (9) after the teleplatform working platform (41) has been moved under the staging platforms (6) and the teleplatform working platform (41) has been oriented in a defined direction (usually towards the hangar centerline). The at least one working platform (6) of the staging structure (20) is/are equipped with retractable sliding platform extensions (7) which can be retracted to allow the aircraft to enter or leave the hangar and extended to guarantee best possible access to the aircraft skin. The platforms additionally have handrails (8) to protect the technicians. Optionally the front working edge may be left open for better aircraft access without handrails under the condition that the technicians use additional personal fall protection systems. The front edge of the sliding platform extension is equipped with protecting bumpers (12) to avoid damages on the aircraft skin.

One or a plurality of the working platform(s) (6,61,62) of the staging structure (20) may be connected to the overhead crane (4) maintenance walkway with an emergency escape stair (10).

An additional crane for material lifting (14) may be installed to allow the technicians to lift the consumables to the platform levels.

The present invention relates to an aerial vehicle vertical stabilizer (31) top access suspended apparatus for treating surfaces or carrying out maintenance/inspection tasks of the top of the vertical stabilizer (31) of the aerial vehicle by at least one technician in a hangar building of reduced height comprising:
a suspended mobile lateral teleplatform unit (30) connected to an overhead crane (4) hanged on the roof of a hangar building of reduced height, the apparatus further comprises a suspended staging structure (20) connected to at least one extremity of the overhead crane (4) by a supporting structure (5), the supporting structure (5) being connected to at least one working platform (6) for treating the surface or carrying out maintenance/inspection tasks of the vertical stabilizer of the aerial vehicle at different heights by the at least one technician, the longitudinal axis of the overhead crane (4) is relatively perpendicular to the vertical axis of the vertical stabilizer (31) and the length of the overhead crane (4) does not extend above the top of the vertical stabilizer (31), i.e. beyond the vertical axis of the vertical stabilizer (31), and the horizontal longitudinal lower part (4A) of the length of the overhead crane (4) is or may be lower in height than the top of the stabilizer (31).

In one embodiment the upper (62) working platform of the supporting structure (5) is substantially at the same level than the horizontal lower part (4A) of the overhead crane (4). In another embodiment the upper (62) working platform of the supporting structure (5) is lower than the top of the vertical stabilizer of the highest aircraft to be served in this hangar.

The meaning of "fixed suspended staging structure (20)" is that the suspended staging structure (20) is not vertically movable even if the lateral teleplatform unit (30) moves vertically. The suspended staging structure (20) can only move laterally and horizontally together with the overhead crane (4).

The meaning of "independent from the vertically movable lateral teleplatform unit (30)" is that the suspended staging structure (20) is an apparatus physically separated, distinct, independent from the teleplatform unit (30). Their only common support is the overhead crane (4). The direct connection of the staging structure (20) with the overhead crane (4) is located at a different place on the overhead crane (4) than the direct connection of the teleplatform unit (30) with the overhead crane (4).

The meaning of "substantially the same level" is a distance between the horizontal longitudinal lower part (4A) of the overhead crane (4) and the horizontal upper (62) working platform of the supporting structure (5). The horizontal upper (62) working platform of the supporting structure (5) can be above or under the horizontal longitudinal lower part (4A) of the overhead crane (4).

**Table 1: minimum and maximum values of the "d, D, H and G" heights:**

| | **Min. Value [m]** | **Max. Value [m]** | **Comments** |
|---|---|---|---|
| **d** | 0.4 | 7 | depends on Customer fleet and available hangar height |
| **D** | 1 | 7 | Depending on H as well as crane girder height (which depends on crane span and max loading of bridge) |
| **H** | 0.5 | 5.5 | Depending on design of runway suspension and potential equipment under the ceiling (lights, ventilation equipment etc.) |
| **Distance upper platform (62) to roof (100) (G)** | 2 | 7 | - |
| **Distance lower platform (61) to roof (100)** | 4 | 9 | - |
| **Distance platform (41) of the teleplatform unit to roof (100)** | 6 | 11 | - |

The vertical distance d between the top of the vertical stabilizer (31) of the highest aircraft to be served in this hangar and the roof (100) of the hangar is preferably comprised between 0,4m and 7m, between 1 m and 6m, between 2m and 5m, between 3 and 4m, between 1 m and 2m.

The vertical distance D between the horizontal lower part (4A) of the overhead crane (4) and the roof (100) of the hangar is comprised preferably between 1 m and 7m, between 1 m and 6m, between 2m and 5m, between 3 and 4m, between 1 m and 2m.

The vertical distance H between the horizontal upper (4B) part of the overhead crane (4) and the roof (100) of the hangar is preferably comprised between 0,5m and 5,5m, between 1 m and 5m, between 2m and 4m, between 2m and 3m, between 3 and 5m, between 1 m and 2m. The vertical distance G between the horizontal upper (62) working platform of the supporting structure (5) and the roof (100) of the hangar is preferably comprised between 2m and 7m, between 2m and 3m, between 2,5m and 3,5m, between 2m and 3m, between 3 and 5m, between 1 m and 2m.

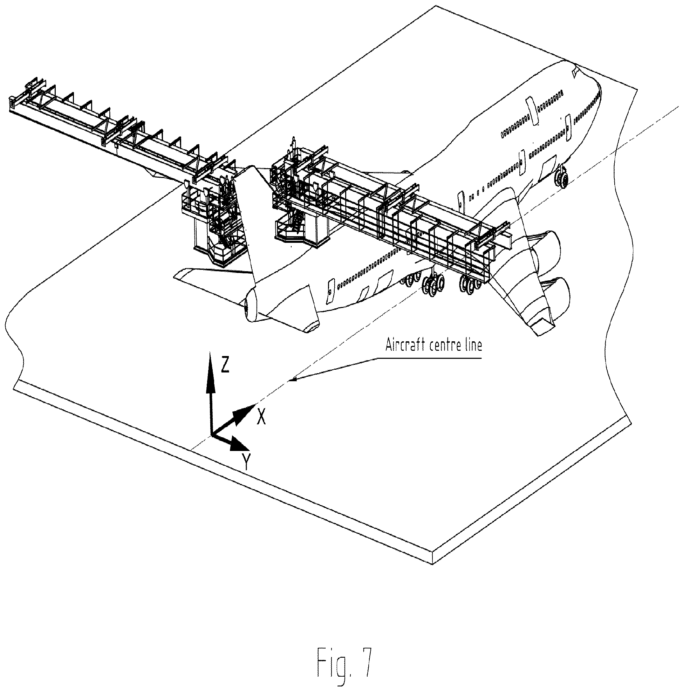

The apparatus of the present disclosure has a single suspended mobile lateral teleplatform unit (30) and a suspended staging structure (20) connected to an overhead crane (4) hanged on the roof (100) of the hangar building of reduced height located on each side of the vertical stabilizer (31). This is shown at figure 7.
The at least one working platform (6) of the suspended staging structure (20) can comprise preferably either one working platform, or more preferably an upper (62) and a lower (61) working platform or even a third intermediate working platform, or a fourth, a fifth, a sixth or even more working platforms.
The apparatus comprises a working platform (41) of the teleplatform unit (30) stopping at about the same lateral position relative to the vertical stabilizer (31) as the lower working platform (61) of the suspended staging structure (20). The air gap between the working platform (41) and the vertical stabilizer (31) is less than 100 cm, less than 80 cm, less than 60 cm, less than 40 cm, less than 30 cm, preferably comprised between 1 cm and 30 cm, more preferably between 1 cm and 25 cm, most preferably between 1 cm and 15 cm, between 1 cm and 10 cm, between 1 cm and 5 cm.
The working platform (6, 61, 62) is positioned such that at least one technician works in a working plane which is substantially parallel to a plane XZ, wherein X is the longitudinal axis of the aerial vehicle and Z is the vertical axis of the vertical stabilizer (31) (see figure 7).
The working platform (6), the upper working platform (62) and the lower working platform (61) are at a working height superior to the maximum working height of a teleplatform working platform (41).

The apparatus can comprise a foldable hinged footbridge connecting the teleplatform working platform (41) and the lower (61) working platform of the staging structure (20).
At least one technician can be lifted from the ground by the teleplatform unit (30) to the lower working platform (6).
The aerial vehicle can be a motorized aerial vehicle, like an aircraft or a helicopter, or the aerial vehicle can be a non-motorized aerial vehicle, like a glider.
The hangar building height is less than 25 meters, and preferably can be comprised between 13 meters and 25 meters.
Stairs (11) link at least two working platforms (6) connected to the supporting structure (5). The working platforms (6) can be equipped with retractable sliding platform extensions (7). The front edge of the sliding platform extension (7) can be equipped with protecting bumpers (12). The working platforms (6) can be equipped with handrails (8).
The front working edge of the working platforms (6) might not be equipped with handrails (8). At least one working platform (61,62) of the staging structure (20) can be connected to the overhead crane (4) maintenance walkway with an emergency escape stair (10).
The access to the suspended staging structure (20) can be achieved using a retractable ladder/stair (9) after the working platform (41) of the teleplatform unit (30) has been moved under the staging platforms (6) and the working platform (41) has been oriented towards the hangar centreline.

The present invention concerns an apparatus for treating surfaces or carrying out maintenance/inspection tasks of a vertical stabilizer (31) (preferably the top) of an aerial vehicle by at least one technician comprising:
- a single overhead crane (4) firmly hanged/attached/connected on a roof (100) of a hangar building,
- a single suspended vertically movable lateral teleplatform unit (30) comprising a telescopic mast (2) connected to the single overhead crane (4),
- a suspended staging structure (20) firmly connected to the overhead crane (4) by a supporting structure (5), the suspended staging structure (20) comprising at least one working platform (61,62) for treating or carrying out maintenance/inspection tasks of the vertical stabilizer (31) of the aerial vehicle at different heights by at least one technician,
the length of the overhead crane (4) does not extend beyond the vertical axis (A) of the vertical stabilizer (31), characterized in that the suspended staging structure (20) is not vertically movable and is independent from the vertically movable lateral teleplatform unit (30) permitting to reach the suspended staging structure (20).

Preferably, a single suspended staging structure (20) is directly connected to a single overhead crane (4) hanged on the roof (100) of the hangar building located on each side of the vertical stabilizer (31).

Preferably the distance D between the horizontal lower part (4A) of the overhead crane (4) and the roof (100) of the hangar is higher than a distance d between the top of the stabilizer (31) of the aerial vehicle and the roof (100) of the hangar.

Preferably the distance D between the horizontal lower part (4A) of the overhead crane (4) and the roof (100) of the hangar is equal or lower than a distance d between the top of the stabilizer (31) of the aerial vehicle and the roof (100) of the hangar.

Preferably the distance G between the horizontal upper (62) working platform and the roof (100) of the hangar is higher than a distance D between the horizontal lower part (4A) of the overhead crane (4) and the roof (100) of the hangar.

Preferably the distance G between the horizontal upper (62) working platform and the roof (100) of the hangar is equal or lower than a distance D between the horizontal lower part (4A) of the overhead crane (4) and the roof (100) of the hangar.

Preferably the distance G between the horizontal upper (62) working platform and the roof (100) of the hangar is higher or equal than a distance d between the top of the stabilizer (31) of the aerial vehicle and the roof (100) of the hangar.

Preferably the distance G between the horizontal upper (62) working platform and the roof (100) of the hangar is lower than a distance d between the top of the stabilizer (31) of the aerial vehicle and the roof (100) of the hangar.

Preferably the distance d between the top of the stabilizer (31) of the aerial vehicle and the roof (100) of the hangar is equal or higher than a distance H between the roof (100) and the upper (4B) horizontal part of the overhead crane (4).

Preferably the distance d between the top of the stabilizer (31) of the aerial vehicle and the roof (100) of the hangar is lower than a distance H between the roof (100) and an upper (4B) horizontal part of the overhead crane (4).

Preferably the retractable stairs (9) link the lower (61) and the upper (62) working platforms of the suspended staging structure (20).

Preferably the upper (62) working platform or at least one working platform (61,62) is connected to the overhead crane (4) maintenance walkway with an emergency escape stair (10).

Preferably the access to the suspended staging structure (20) is achieved using retractable stairs (9) after a working platform (41) of the teleplatform unit (30) has been moved under the lower (61) working platform of the staging structure (20) and the working platform (41) has been oriented towards the hangar building centreline.

The present disclosure also relates also to a process for treating surfaces or carrying out maintenance/inspection tasks of a vertical stabilizer (31) of an aerial vehicle by at least one technician in a hangar building of reduced height comprising the following steps:
- lifting at least one technician from the ground by a teleplatform unit (30) to the proximity of a lower (61) working platform (6) of a suspended staging structure (20),
- treating the surface or carrying out maintenance/inspection tasks of the vertical stabilizer (31) of the aerial vehicle at different heights by the at least one technician,
- working at a working height superior to the maximum working height of a teleplatform working platform (41).
- moving an overhead crane (4) at a distance D being the distance between the horizontal lower part (4A) of the overhead crane (4) and the roof (100) of the hangar and the distance D which may be higher than the distance d between the top of the stabilizer (31) of the highest aircraft to be served in this hangar and roof (100) of the hangar,
- working on an upper (62) working platform of a supporting structure (5) being at substantially the same level than the horizontal lower part (4A) of the overhead crane (4) or substantially 1,5m lower than the top of the vertical stabilizer of the highest aircraft to be served in this hangar.

The surface of the vertical stabilizer (31) of the aerial vehicle can be treated simultaneously at different heights by the at least one technician.

The working platform (6, 61, 62) of the staging structure (20) is positioned such that at least one technician works in a working plane which is substantially parallel to a plane XZ, wherein X is the longitudinal axis of the aerial vehicle and Z is the vertical axis of the vertical stabilizer (31) (see figure 7).

The suspended staging structure (20) of the present invention is firmly attached to an end face of the rails of the overhead crane (4) allowing it to give access to a higher position of the aircraft than the mobile teleplatform (30).

The present invention relates also to a process for treating surfaces or carrying out maintenance/inspection tasks of a vertical stabilizer (31) of an aerial vehicle by the apparatus of the present invention, comprising the following steps:
- reaching a working position where the length of the overhead crane (4) does not extend beyond the vertical axis of the vertical stabilizer (31),
- lifting at least one technician from the ground by a teleplatform unit (30) to the proximity of an independent and vertically non movable suspended staging structure (20) comprising at least one working platform (61,62),
- accessing the independent and vertically non movable suspended staging structure (20) from the vertically movable lateral teleplatform unit (30) by a ladder (9),
- treating the surface or carrying out maintenance/inspection tasks of the vertical stabilizer (31) of the aerial vehicle at different heights by at least one technician.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. **Apparatus** for being placed in a hangar building comprising a roof (100), said apparatus being conceived for treating surfaces or carrying out maintenance and/or inspection tasks of a vertical stabilizer **(31)** of an aerial vehicle by at least one technician comprising:
- a single overhead crane **(4)** for being firmly hanged on the roof (100),
- a single suspended vertically movable lateral teleplatform unit **(30)** comprising a telescopic mast (2) directly connected to the single overhead crane (4),
- a suspended staging structure **(20)** firmly connected to the overhead crane (4) by a supporting structure **(5),** the suspended staging structure (20) comprising at least one working platform (61,62) for treating or carrying out maintenance and/or inspection tasks of the vertical stabilizer (31) of the aerial vehicle at different heights by at least one technician,
the length of the overhead crane (4) being such that in use it does not extend beyond the vertical axis (A) of the vertical stabilizer (31),
**characterized in that** the suspended staging structure (20) is not vertically movable and is independent from the vertically movable lateral teleplatform unit (30) permitting to reach the suspended staging structure (20),
and **in that** the suspended staging structure (20) is connected to an extremity of the overhead crane (4).

2. The apparatus of claim 1, wherein at least one stair (11) link a lower (61) working platform and an upper (62) working platform of the suspended staging structure (20).

3. The apparatus of claim 1, wherein at least one working platform (61,62) of the staging structure (20) is connected to the overhead crane (4) maintenance walkway with at least one emergency escape stair (10).

4. The apparatus of claim 1, wherein the access to a lower (61) working platform of the suspended staging structure (20) is achieved using at least one retractable stair (9) after a working platform (41) of the teleplatform unit (30) has been moved under the lower (61) working platform and the teleplatform working platform (41) has been oriented towards the hangar building centreline.

5. Process for treating surfaces or carrying out maintenance and/or inspection tasks of a vertical stabilizer (31) of an aerial vehicle by the apparatus of claims 1 to 4, comprising the following steps:
- reaching a working position where the length of the overhead crane (4) does not extend beyond the vertical axis (A) of the vertical stabilizer (31),
- lifting at least one technician from the ground by a teleplatform unit (30) to the proximity of an independent and vertically non movable suspended staging structure (20) comprising at least one working platform (61,62),
- accessing from the vertically movable lateral teleplatform unit (30), by a retractable stair (9), the independent and vertically non movable suspended staging structure (20),
- treating the surface or carrying out maintenance/inspection tasks of the vertical stabilizer (31) of the aerial vehicle at different heights by at least one technician.

6. The process of claim 5, wherein the surface of the vertical stabilizer (31) of the aerial vehicle is treated simultaneously at different heights by different technicians.

7. The process of claim 5, wherein an upper working platform (62) is positioned such that at least one technician works in a working plane which is substantially parallel to a plane XZ, wherein X is the longitudinal axis of the aerial vehicle and Z is the vertical axis of the vertical stabilizer (31).

8. Use of the apparatus of claim 1, firmly hanged on the roof (100) of a hangar building for treating surfaces or carrying out maintenance and/or inspection tasks of a vertical stabilizer (31) of an aerial vehicle by at least one technician, wherein the length of the overhead crane (4) does not extend beyond the vertical axis (A) of the vertical stabilizer (31).

9. Use of the apparatus of claim 1, firmly hanged on the roof (100) of a hangar building for treating surfaces or carrying out maintenance and/or inspection tasks of a vertical stabilizer **(31)** of an aerial vehicle by at least one technician, wherein a distance D between a horizontal lower part (4A) of the overhead crane (4) and the roof (100) of the hangar is higher than a distance d between the top of the stabilizer (31) of the aerial vehicle and the roof (100) of the hangar.

10. Use of the apparatus of claim 1, firmly hanged on the roof (100) of a hangar building for treating surfaces or carrying out maintenance and/or inspection tasks of a vertical stabilizer **(31)** of an aerial vehicle by at least one technician, wherein a distance D between a horizontal lower part (4A) of the overhead crane (4) and the roof (100) of the hangar is equal or lower than a distance d between the top of the stabilizer (31) of the aerial vehicle and the roof (100) of the hangar.

11. Use of the apparatus of claim 1, firmly hanged on the roof (100) of a hangar building for treating surfaces or carrying out maintenance and/or inspection tasks of a vertical stabilizer **(31)** of an aerial vehicle by at least one technician, wherein the distance G between a horizontal upper (62) working platform and the roof (100) of the hangar is higher or equal than a distance d between the top of the stabilizer (31) of the aerial vehicle and the roof (100) of the hangar.

12. Use of the apparatus of claim 1, firmly hanged on the roof (100) of a hangar building for treating surfaces or carrying out maintenance and/or inspection tasks of a vertical stabilizer **(31)** of an aerial vehicle by at least one technician, wherein the distance G between a horizontal upper (62) working platform and the roof (100) of the hangar is lower than a distance d between the top of the stabilizer (31) of the aerial vehicle and the roof (100) of the hangar.

13. Use of the apparatus of claim 1, firmly hanged on the roof (100) of a hangar building for treating surfaces or carrying out maintenance and/or inspection tasks of a vertical stabilizer (**31**) of an aerial vehicle by at least one technician, wherein a distance d between the top of the stabilizer (31) of the aerial vehicle and the roof (100) of the hangar is equal or higher than a distance H between the roof (100) and an upper (4B) horizontal part of the overhead crane (4).

14. Use of the apparatus of claim 1, firmly hanged on the roof (100) of a hangar building for treating surfaces or carrying out maintenance and/or inspection tasks of a vertical stabilizer (31) of an aerial vehicle by at least one technician, wherein a distance d between the top of the stabilizer (31) of the aerial vehicle and the roof (100) of the hangar is lower than a distance H between the roof (100) and an upper (4B) horizontal part of the overhead crane (4).

15. Use according to claims 9 to 14, firmly hanged on the roof (100) of a hangar building for treating surfaces or carrying out maintenance and/or inspection tasks of a vertical stabilizer **(31)** of an aerial vehicle by at least one technician, wherein the distance d is comprised between 0,4m and 7m, the distance G is comprised between 2m and 7m, the distance D is comprised between 1 m and 7m and the distance H is comprised between 0,5m and 5,5m.

16. Use of the apparatus of claim 1, firmly hanged on the roof (100) of a hangar building for treating surfaces or carrying out maintenance and/or inspection tasks of a vertical stabilizer **(31)** of an aerial vehicle by at least one technician, wherein the distance G between a horizontal upper (62) working platform and the roof (100) of the hangar is higher than a distance D between a horizontal lower part (4A) of the overhead crane (4) and the roof (100) of the hangar.

17. Use of the apparatus of claim 1, firmly hanged on the roof (100) of a hangar building for treating surfaces or carrying out maintenance and/or inspection tasks of a vertical stabilizer **(31)** of an aerial vehicle by at least one technician, wherein the distance G between a horizontal upper (62) working platform and the roof (100) of the hangar is equal or lower than a distance D between a horizontal lower part (4A) of the overhead crane (4) and the roof (100) of the hangar.

## Patentansprüche

1. Vorrichtung zum Einbau in ein Hangargebäude, umfassend ein Dach (100), wobei die Vorrichtung ausgelegt ist, um bei einem vertikalen Stabilisierer (31) eines Luftfahrzeugs durch mindestens einen Techniker Flächen zu behandeln oder Wartungs- und/oder Inspektionsaufgaben durchzuführen, umfassend:
- einen einzelnen Brückenkran (4), um fest auf dem Dach (100) aufgehängt zu sein,
- eine einzelne aufgehängte, vertikal bewegliche seitliche Teleplattformeinheit (30), umfassend einen teleskopischen Masten (2), der direkt mit dem einzelnen Brückenkran (4) verbunden ist,
- eine aufgehängte Gerüststruktur (20), die durch eine Tragstruktur (5) fest mit dem Brückenkran (4) verbunden ist, wobei die aufgehängte Gerüststruktr (20) mindestens eine Arbeitsplattform (61, 62) umfasst, um die Behandlung oder Wartungs- und/oder Inspektionsaufgaben des vertikalen Stabilisierers (31) des Luftfahrzeugs auf verschiedenen Höhen durch mindestens einen Techniker durchzuführen,
wobei die Länge des Brückenkrans (4) derart ist, dass sie sich bei Benutzung nicht über die vertikale Ache (A) des vertikalen Stabilisierers (31) hinaus erstreckt,
**dadurch gekennzeichnet, dass** die aufgehängte Gerüststruktur (20) nicht vertikal beweglich und unabhängig von der vertikal beweglichen seitlichen Teleplattformeinheit (30) ist, die ermöglicht, die aufgehängte Gerüststruktur (20) zu erreichen, und
dadurch, dass die aufgehängte Gerüststruktur (20) mit einem Ende des Brückenkrans (4) verbunden ist.

2. Vorrichtung nach Anspruch 1, wobei mindestens eine Treppe (11) eine untere (61) Arbeitsplattform und eine obere (62) Arbeitsplattform der aufgehängten Gerüststruktur (20) verbindet.

3. Vorrichtung nach Anspruch 1, wobei mindestens eine Arbeitsplattform (61, 62) der Gerüststruktur (20) mit dem Wartungssteg des Brückenkrans (4) mit mindestens einer Notfluchttreppe (10) verbunden ist.

4. Vorrichtung nach Anspruch 1, wobei der Zugang zu einer unteren (61) Arbeitsplattform der aufgehängten Gerüststruktur (20) unter Verwendung von mindestens einer einziehbaren Treppe (9) erhalten wird, nachdem eine Arbeitsplattform (41) der Teleplattformeinheit (30) unter die untere (1) Arbeitsplattform bewegt wurde und die Arbeitsplattform (41) der Teleplattform hin zur zentralen Linie des Hangargebäudes ausgerichtet wurde.

5. Verfahren zur Behandlung von Oberflächen oder Durchführung von Wartungs- und/oder Inspektionsaufgaben eines vertikalen Stabilisierers (31) eines Luftfahrzeugs durch die Vorrichtung nach Anspruch 1 bis 4, umfassend die folgenden Schritte:
- Erreichen einer Arbeitsposition, in der sich die Länge des Brückenkrans (4) nicht über die vertikale Achse (A) des vertikalen Stabilisierers (31) hinaus erstreckt,
- Heben von mindestens einem Techniker vom Boden durch eine Teleplattformeinheit (30) in die Nähe einer unabhängigen und vertikal nicht beweglichen aufgehängten Gerüststruktur (20), umfassend mindestens eine Arbeitsplattform (61, 62),
- Zugang, von der vertikal beweglichen seitlichen Teleplattformeinheit (30) durch eine einziehbare Treppe (9) zur unabhängigen und nicht beweglichen aufgehängten Gerüststruktur (20),
- Behandeln der Oberfläche oder Durchführen von Wartungs-/Inspektionsaufgaben des vertikalen Stabilisierers (31) des Luftfahrzeugs auf verschiedenen Höhen durch mindestens einen Techniker.

6. Verfahren nach Anspruch 5, wobei die Oberfläche des vertikalen Stabilisierers (31) des Luftfahrzeugs gleichzeitig auf verschiedenen Höhen durch verschiedene Techniker behandelt wird.

7. Verfahren nach Anspruch 5, wobei eine obere Arbeitsplattform (62) derart positioniert ist, dass mindestens ein Techniker auf einer Arbeitsebene arbeitet, die im Wesentlichen parallel zu einer Ebene XZ ist, wobei X die Längsachse des Luftfahrzeugs und Z die vertikale Achse des vertikalen Stabilisierers (31) ist.

8. Verwendung der Vorrichtung nach Anspruch 1, die fest auf dem Dach (100) eines Hangargebäudes aufgehängt ist, um Oberflächen zu behandeln oder Wartungs- und/oder Inspektionsaufgaben eines vertikalen Stabilisierers (31) eines Luftfahrzeugs durch mindestens einen Techniker durchzuführen, wobei sich die Länge des Brückenkrans (4) nicht über die vertikale Achse (A) des vertikalen Stabilisierers (31) hinaus erstreckt.

9. Verwendung der Vorrichtung nach Anspruch 1, die fest auf dem Dach (100) eines Hangargebäudes aufgehängt ist, um Oberflächen zu behandeln oder Wartungs- und/oder Inspektionsaufgaben eines vertikalen Stabilisierers (31) eines Luftfahrzeugs durch mindestens einen Techniker durchzuführen, wobei ein Abstand D zwischen einem horizontalen unteren Teil (4A) des Brückenkrans (4) und dem Dach (100) des Hangars größer als ein Abstand d zwischen der oberen Seite des Stabilisierers (31) des Luftfahrzeugs um dem Dach (100) des Hangars ist.

10. Verwendung der Vorrichtung nach Anspruch 1, die fest auf dem Dach (100) eines Hangargebäudes aufgehängt ist, um Oberflächen zu behandeln oder Wartungs- und/oder Inspektionsaufgaben eines vertikalen Stabilisierers (31) eines Luftfahrzeugs durch mindestens einen Techniker durchzuführen, wobei ein Abstand D zwischen einem horizontalen unteren Teil (4A) des Brückenkrans (4) und dem Dach (100) des Hangars gleich wie oder kleiner als ein Abstand d zwischen der oberen Seite des Stabilisierers (31) des Luftfahrzeugs und dem Dach (100) des Hangars ist.

11. Verwendung der Vorrichtung nach Anspruch 1, die fest auf dem Dach (100) eines Hangargebäudes aufgehängt ist, um Oberflächen zu behandeln oder Wartungs- und/oder Inspektionsaufgaben eines vertikalen Stabilisierers (31) eines Luftfahrzeugs durch mindestens einen Techniker durchzuführen, wobei der Abstand G zwischen einer horizontalen oberen (62) Arbeitsplattform und dem Dach (100) des Hangars größer als oder gleich wie ein Abstand d zwischen der oberen Seite des Stabilisierers (31) des Luftfahrzeugs und dem Dach (100) des Hangars ist.

12. Verwendung der Vorrichtung von Anspruch 1, die fest auf dem Dach (100) eines Hangargebäudes aufgehängt ist, um Oberflächen zu behandeln oder Wartungs- und/oder Inspektionsaufgaben eines vertikalen Stabilisierers (31) eines Luftfahrzeugs durch mindestens einen Techniker durchzuführen, wobei der Abstand G zwischen einer horizontalen oberen (62) Arbeitsplattform und dem Dach (100) des Hangars kleiner als ein Abstand d zwischen der oberen Seite des Stabilisierers (31) des Luftfahrzeugs um dem Dach (100) des Hangars ist.

13. Verwendung der Vorrichtung nach Anspruch 1, die fest auf dem Dach (100) eines Hangargebäudes aufgehängt ist, um Oberflächen zu behandeln oder Wartungs- und/oder Inspektionsaufgaben eines vertikalen Stabilisierers (31) eines Luftfahrzeugs durch mindestens einen Techniker durchzuführen, wobei ein Abstand d zwischen der oberen Seite des Stabilisierers (31) des Luftfahrzeugs und dem Dach (100) des Hangars gleich wie oder größer als ein Abstand H zwischen dem Dach (100) und einem oberen (4B) horizontalen Teil des Brückenkrans (4) ist.

14. Verwendung der Vorrichtung nach Anspruch 1, die fest auf dem Dach (100) eines Hangargebäudes aufgehängt ist, um Oberflächen zu behandeln oder Wartungs- und/oder Inspektionsaufgaben eines vertikalen Stabilisierers (31) eines Luftfahrzeugs durch mindestens einen Techniker durchzuführen, wobei ein Abstand d zwischen der oberen Seite des Stabilisierers (31) des Luftfahrzeugs um dem Dach (100) des Hangars kleiner als ein Abstand H zwischen dem Dach (100) und einem oberen (4B) horizontalen Teil des Brückenkrans (4) ist.

15. Verwendung der Vorrichtung nach Anspruch 9 bis 14, die fest auf dem Dach (100) eines Hangargebäudes aufgehängt ist, um Oberflächen zu behandeln oder Wartungs- und/oder Inspektionsaufgaben eines vertikalen Stabilisierers (31) eines Luftfahrzeugs durch mindestens einen Techniker durchzuführen, wobei der Abstand d im Bereich zwischen 0,4 m und 7 m liegt, der Abstand G im Bereich zwischen 2 m und 7 m liegt, der Abstand D im Bereich zwischen 1 m und 7 m liegt und der Abstand H im Bereich zwischen 0,5 m und 5,5 m liegt.

16. Verwendung der Vorrichtung nach Anspruch 1, die fest auf dem Dach (100) eines Hangargebäudes aufgehängt ist, um Oberflächen zu behandeln oder Wartungs- und/oder Inspektionsaufgaben eines vertikalen Stabilisierers (31) eines Luftfahrzeugs durch mindestens einen Techniker durchzuführen, wobei der Abstand G zwischen einer horizontalen oberen (62) Arbeitsplattform und dem Dach (100) des Hangars größer als ein Abstand D zwischen einem horizontalen unteren Teil (4A) des Brückenkrans (4) und dem Dach (100) des Hangars ist.

17. Verwendung der Vorrichtung nach Anspruch 1, die fest auf dem Dach (100) eines Hangargebäudes aufgehängt ist, um Oberflächen zu behandeln oder Wartungs- und/oder Inspektionsaufgaben eines vertikalen Stabilisierers (31) eines Luftfahrzeugs durch mindestens einen Techniker durchzuführen, wobei der Abstand G zwischen einer horizontalen oberen (62) Arbeitsplattform und dem Dach (100) des Hangars gleich wie oder kleiner als ein Abstand D zwischen einem horizontalen unteren Teil (4A) des Brückenkrans (4) und dem Dach (100) des Hangars ist.

## Revendications

1. Appareil destiné à être placé dans un bâtiment de hangar comprenant un toit (100), ledit appareil étant conçu pour traiter des surfaces ou réaliser des tâches d'entretien et/ou d'inspection d'un stabilisateur vertical (31) d'un véhicule aérien par au moins un technicien, comprenant :
un pont roulant unique (4) destiné à être suspendu fermement au toit (100),
une unité de plateforme télescopique suspendue latérale verticalement mobile (30) unique comprenant un mât télescopique (2) directement raccordé au pont roulant (4) unique,
une structure d'échafaudage suspendue (20) fermement raccordée au pont roulant (4) par une structure de support (5), la structure d'échafaudage suspendue (20) comprenant au moins une plateforme de travail (61, 62) pour traiter ou réaliser des tâches d'entretien et/ou d'inspection du stabilisateur vertical (31) du véhicule aérien à différentes hauteurs par au moins un technicien,
la longueur du pont roulant (4) étant telle qu'à l'usage, elle ne s'étend pas au-delà de l'axe vertical (A) du stabilisateur vertical (31),
**caractérisé en ce que** la structure d'échafaudage suspendue (20) n'est pas verticalement mobile et est indépendante de l'unité de plateforme télescopique verticalement mobile (30) permettant d'atteindre la structure d'échafaudage suspendue (20) ,
et **en ce que** la structure d'échafaudage suspendue (20) est raccordée à une extrémité du pont roulant (4).

2. Appareil selon la revendication 1, dans lequel au moins un escalier (11) relie une plateforme de travail inférieure (61) et une plateforme de travail supérieure (62) de la structure d'échafaudage suspendue (20).

3. Appareil selon la revendication 1, dans lequel au moins une plateforme de travail (61, 62) de la structure d'échafaudage (20) est raccordée à la passerelle d'entretien du pont roulant (4) avec au moins un escalier de secours (10).

4. Appareil selon la revendication 1, dans lequel l'accès à la plateforme de travail inférieure (61) de la structure d'échafaudage suspendue (20) est obtenu à l'aide d'au moins un escalier rétractable (9) après qu'une plateforme de travail (41) de l'unité de plateforme télescopique (30) a été déplacée sous la plateforme de travail inférieure (61) et que la plateforme de travail (41) de la plateforme télescopique a été orientée vers l'axe central du bâtiment de hangar.

5. Procédé pour traiter des surfaces ou réaliser des tâches d'entretien et/ou d'inspection d'un stabilisateur vertical (31) d'un véhicule aérien par l'appareil selon les revendications 1 à 4, comprenant les étapes suivantes consistant à :
atteindre une position de travail dans laquelle la longueur du pont roulant (4) ne s'étend pas au-delà de l'axe vertical (A) du stabilisateur vertical (31),
lever au moins un technicien du sol par l'unité de plateforme télescopique (30) jusqu'à proximité d'une structure d'échafaudage suspendue verticalement immobile (20) comprenant au moins une plateforme de travail (61, 62),
avoir accès, à partir de l'unité de plateforme latérale verticalement mobile (30), par un escalier rétractable (9), à la structure d'échafaudage suspendue (20) indépendante et verticalement immobile,
traiter la surface ou réaliser les tâches d'entretien/inspection du stabilisateur vertical (31) du véhicule aérien à différentes hauteurs par au moins un technicien.

6. Procédé selon la revendication 5, dans lequel la surface du stabilisateur vertical (31) du véhicule aérien est traitée simultanément à différentes hauteurs par différents techniciens.

7. Procédé selon la revendication 5, dans lequel une plateforme de travail supérieure (62) est positionnée de sorte qu'au moins un technicien travaille dans un plan de travail qui est sensiblement parallèle à un plan XZ, dans lequel X est l'axe longitudinal du véhicule aérien et Z est l'axe vertical du stabilisateur vertical (31).

8. Utilisation de l'appareil selon la revendication 1, fermement suspendu au toit (100) d'un bâtiment de hangar pour traiter des surfaces ou réaliser des tâches d'entretien et/ou d'inspection d'un stabilisateur vertical (31) d'un véhicule aérien par au moins un technicien, dans laquelle la longueur du pont roulant (4) ne s'étend pas au-delà de l'axe vertical (A) du stabilisateur vertical (31).

9. Utilisation de l'appareil selon la revendication 1, fermement suspendu au toit (100) d'un bâtiment de hangar pour traiter des surfaces ou réaliser des tâches d'entretien et/ou d'inspection d'un stabilisateur vertical (31) d'un véhicule aérien par au moins un technicien, dans laquelle une distance D entre une partie inférieure horizontale (4A) du pont roulant (4) et le toit (100) du hangar est supérieure à une distance d entre la partie supérieure du stabilisateur (31) du véhicule aérien et le toit (100) du hangar.

10. Utilisation de l'appareil selon la revendication 1, fermement suspendu au toit (100) d'un bâtiment de hangar pour traiter des surfaces ou réaliser des tâches d'entretien et/ou d'inspection d'un stabilisateur vertical (31) d'un véhicule aérien par au moins un technicien, dans laquelle une distance D entre une partie inférieure horizontale (4A) du pont roulant (4) et le toit (100) du hangar est égale ou inférieure à une distance d entre la partie supérieure du stabilisateur (31) du véhicule aérien et le toit (100) du hangar.

11. Utilisation de l'appareil selon la revendication 1, fermement suspendu au toit (100) d'un bâtiment de hangar pour traiter des surfaces ou réaliser des tâches d'entretien et/ou d'inspection d'un stabilisateur vertical (31) d'un véhicule aérien par au moins un technicien, dans laquelle la distance G entre une plateforme de travail supérieure horizontale (62) et le toit (100) du hangar est supérieure ou égale à une distance d entre la partie supérieure du stabilisateur (31) du véhicule aérien et le toit (100) du hangar.

12. Utilisation de l'appareil selon la revendication 1, fermement suspendu au toit (100) d'un bâtiment de hangar pour traiter des surfaces ou réaliser des tâches d'entretien et/ou d'inspection d'un stabilisateur vertical (31) d'un véhicule aérien par au moins un technicien, dans laquelle la distance G entre une plateforme de travail supérieure horizontale (62) et le toit (100) du hangar est inférieure à une distance d entre la partie supérieure du stabilisateur (31) du véhicule aérien et le toit (100) du hangar.

13. Utilisation de l'appareil selon la revendication 1, fermement suspendu au toit (100) d'un bâtiment de hangar pour traiter des surfaces ou réaliser des tâches d'entretien et/ou d'inspection d'un stabilisateur vertical (31) d'un véhicule aérien par au moins un technicien, dans laquelle une distance d entre la partie supérieure du stabilisateur (31) du véhicule aérien et le toit (100) du hangar est égale ou supérieure à une distance H entre le toit (100) et une partie horizontale supérieure (4B) du pont roulant (4).

14. Utilisation de l'appareil selon la revendication 1, fermement suspendu au toit (100) d'un bâtiment de hangar pour traiter des surfaces ou réaliser des tâches d'entretien et/ou d'inspection d'un stabilisateur vertical (31) d'un véhicule aérien par au moins un technicien, dans laquelle une distance d entre la partie supérieure du stabilisateur (31) du véhicule aérien et le toit (100) du hangar est inférieure à une distance H entre le toit (100) et une partie horizontale supérieure (4B) du pont roulant (4).

15. Utilisation de l'appareil selon les revendications 9 à 14, fermement suspendu au toit (100) d'un bâtiment de hangar pour traiter des surfaces ou réaliser des tâches d'entretien et/ou d'inspection d'un stabilisateur vertical (31) d'un véhicule aérien par au moins un technicien, dans laquelle la distance d est comprise entre 0,4 m et 7 m, la distance G est comprise entre 2 m et 7 m, la distance D est comprise entre 1 m et 7 m et la distance H est comprise entre 0,5 m et 5,5 m.

16. Utilisation de l'appareil selon la revendication 1, fermement suspendu au toit (100) d'un bâtiment de hangar pour traiter des surfaces ou réaliser des tâches d'entretien et/ou d'inspection d'un stabilisateur vertical (31) d'un véhicule aérien par au moins un technicien, dans laquelle la distance G entre une plateforme de travail supérieure horizontale (62) et le toit (100) du hangar est supérieure à une distance D entre une partie inférieure horizontale (4A) du pont roulant (4) et le toit (100) du hangar.

17. Utilisation de l'appareil selon la revendication 1, fermement suspendu au toit (100) d'un bâtiment de hangar pour traiter des surfaces ou réaliser des tâches d'entretien et/ou d'inspection d'un stabilisateur vertical (31) d'un véhicule aérien par au moins un technicien, dans laquelle la distance G entre une plateforme de travail supérieure horizontale (62) et le toit (100) du hangar est égale ou inférieure à une distance D entre une partie inférieure horizontale (4A) du pont roulant (4) et le toit (100) du hangar.
